# EUROPEAN PATENT APPLICATION

(11) **EP 3 321 531 A1**
(43) Date of publication of application: **16.05.2018**
(21) Application number: 16821169.6
(22) Date of filing: 09.06.2016
(51) Int. Cl.: F16D 3/2245, F16D 3/20, F16D 3/2237, F16D 3/227

(54) **FIXED-TYPE CONSTANT VELOCITY UNIVERSAL JOINT**

(30) Priority: 08.07.2015 JP 2015136964
(71) Applicant: NTN Corporation, Osaka-shi, Osaka 550-0003 (JP)
(72) Inventor: ASANO Yuichi, Iwata-shi Shizuoka 438-8510 (JP)
(74) Representative: Grünecker Patent- und Rechtsanwälte PartG mbB
(86) International application number: PCT/JP2016/067279
(87) International publication number: WO 2017/006698

(57) **Abstract**

Provided is a fixed type constant velocity universal joint, including: an outer joint member (10) having a cup-shape; and an inner joint member (20), which is received in the outer joint member (10), and is configured to transmit torque between the inner joint member (20) and the outer joint member (10) through intermediation of balls (30) while allowing angular displacement. The fixed type constant velocity universal joint has a shaft (50) extending from the inner joint member (20). The shaft (50) includes a large-diameter portion (51), which is formed integrally with the shaft (50), and interferes with the balls (30) when the shaft (50) forms an operating angle, which is larger than a maximum, operating angle, with respect to the outer joint member (10) .

## Description

### Technical Field

The present invention relates to a fixed type constant velocity universal joint, which is to be used in power transmission systems for automobiles and various industrial machines, in particular, is to be mounted to a drive shaft for a rear wheel of an automobile and a propeller shaft for an automobile.

### Background Art

As a constant velocity universal joint which is used as a unit configured to transmit a rotational force at constant velocity from an engine to a wheel of an automobile, there are given two types, specifically, a fixed type constant velocity universal joint and a plunging type constant velocity universal joint. Both of those constant velocity universal joints each have a structure capable of coupling two shafts on a driving side and a driven side to each other, and transmitting rotational torque at constant velocity even when each of the two shafts forms an operating angle.

It is necessary that a drive shaft configured to transmit power from an engine to a driving wheel of an automobile be adaptable to angular displacement and axial displacement caused by a change in relative positional relationship between the engine and the wheel. Therefore, in general, the drive shaft has the following structure. The plunging type constant velocity universal joint which allows both the axial displacement and the angular displacement is installed on the engine side (inboard side), and the fixed type constant velocity universal joint which allows only the angular displacement is installed on the driving wheel side (outboard side). Both the constant velocity universal joints are coupled to each other through intermediation of the shaft.

The fixed type constant velocity universal joint described above cannot allow the axial displacement, but can allow a large operating angle (maximum operating angle of 45° or more) . In this respect, the fixed type constant velocity universal joint described above is applied to a driving wheel side of a drive shaft for a front wheel of an automobile in many cases.

Meanwhile, the fixed type constant velocity universal joint is applied to a driving wheel side of a drive shaft for a rear wheel of an automobile or a propeller shaft for an automobile in some cases. In this case, unlike for the front wheel of an automobile, it is unnecessary to set the maximum operating angle to 45° or more. For the rear wheel of an automobile, the maximum operating angle is 30° or less, and for the propeller shaft, the maximum operating angle is 10° or less.

As described above, in the drive shaft for a rear wheel of an automobile, the maximum operating angle is 30° or less, which is small. Therefore, in order to attain down weighting and cost reduction of the constant velocity universal joint, there is used an outer joint member, which is reduced in axial dimension by shortening track grooves as compared to an outer joint member to be used in the drive shaft for a front wheel of an automobile.

In general, at the time of assembling the constant velocity universal joint, an angle which is equal to or larger than the maximum operating angle is formed, and then balls are incorporated. At the time of handling the constant velocity universal joint having the balls incorporated therein, for example, at the time of transporting the constant velocity universal joint or assembling the constant velocity universal joint to a vehicle, components including an outer joint member, an inner joint member, a cage, and the balls are in a free state. In the free state, the constant velocity universal joint may form an angle which exceeds the maximum operating angle due to own weights of the components.

Even when the constant velocity universal joint forms an operating angle which is larger than the maximum operating angle as described above, in the constant velocity universal joint to be used in the drive shaft for a front wheel of an automobile, the shaft interferes with the outer joint member at an angle smaller than an angle which causes the balls to drop off, thereby preventing the balls from dropping off the track grooves of the outer joint member.

However, in the constant velocity universal joint including the outer joint member having a small axial dimension as described above, which is to be used in the drive shaft for a rear wheel of an automobile, when an operating angle which is larger than the maximum operating angle is formed, the operating angle exceeds the angle which causes the balls to drop off before the shaft interferes with the outer joint member, with the result that the balls drop off the track grooves of the outer joint member.

In view of the above, there have been proposed various constant velocity universal joints each having a measure for preventing the balls from dropping off the track grooves of the outer joint member at the time of handling the constant velocity universal joint (for example, see Patent Literatures 1 and 2).

### Citation List

Patent Literature 1: JP 2001-280359 A
Patent Literature 2: JP 2011-80556 A

### Summary of Invention

### Technical Problem

Incidentally, the constant velocity universal joints disclosed in Patent Literature 1 and Patent Literature 2, which each have the measure for preventing the balls from dropping off the track grooves of the outer joint member at the time of handling the constant velocity universal joint, have the following structures and problems.

First, the constant velocity universal joint disclosed in Patent Literature 1 has the following stopper structure. A shaft extending from the inner joint member has a projection at a portion in the vicinity of an opening portion of the outer joint member. The projection is abuttable against an opening end portion of the outer joint member. In the constant velocity universal joint, when the shaft forms an operating angle, which is larger than the maximum operating angle, with respect to the outer joint member, the projection of the shaft interferes with the opening end portion of the outer joint member, thereby preventing the balls from dropping off the track grooves of the outer joint member.

However, in the case of the constant velocity universal joint disclosed in Patent Literature 1, the projection is formed on the shaft. Therefore, a blank diameter of the shaft before being subjected to cutting work is required to be set large. As a result, cutting work for the shaft for forming the projection is required, and further, a blank having a large diameter is required to be prepared for the shaft. Those reasons cause difficulty in attaining cost reduction of the constant velocity universal joint in the aspect of cost of a blank and cost of cutting work.

Next, the constant velocity universal joint disclosed in Patent Literature 2 has the following stopper structure. An opening-side regulating member is provided between the inner joint member and the shaft. The opening-side regulating member is configured to regulate axial displacement of the shaft with respect to the inner joint member. The opening-side regulating member is abuttable against the balls. In the constant velocity universal joint, when the shaft forms an operating angle, which is larger than the maximum operating angle, with respect to the outer joint member, the opening-side regulating member interferes with the balls, thereby preventing the balls from dropping off the track grooves of the outer joint member.

However, in the case of the constant velocity universal joint disclosed in Patent Literature 2, the structure is constructed such that the opening-side regulating member which serves as a member for preventing falling of the balls is mounted to the shaft and is brought into abutment against the inner joint member. In this manner, the opening-side regulating member, which is a member other than the shaft, is required. Therefore, the number of components is increased, and cost reduction of the constant velocity universal joint is made difficult.

The present invention has been proposed in view of the problems described above, and has an object to provide a constant velocity universal joint, which has a simple stopper structure for preventing balls from dropping off an outer joint member, and is capable of easily attaining cost reduction.

### Solution to Problem

As a technical measure to attain the above-mentioned object, according to one embodiment of the present invention, there is provided a fixed type constant velocity universal joint, comprising: an outer joint member having a cup-shape; and an inner joint member, which is received in the outer joint member, and is configured to transmit torque between the inner joint member and the outer joint member through intermediation of balls while allowing angular displacement, the fixed type constant velocity universal joint having a shaft extending from the inner joint member, the shaft comprising a large-diameter portion, which is formed integrally with the shaft, and interferes with the balls when the shaft forms an operating angle, which is larger than a maximum operating angle, with respect to the outer joint member.

According to one embodiment of the present invention, when the shaft forms an operating angle, which is larger than the maximum operating angle, with respect to the outer joint member, the large-diameter portion formed integrally with the shaft interferes with the balls. With this configuration, at the time of handling the constant velocity universal joint, the large-diameter portion of the shaft exhibits a function as a stopper configured to regulate the operating angle to an angle smaller than an angle which causes the balls to drop off. As a result, at the time of handling the constant velocity universal joint, the balls can be prevented from dropping off the outer joint member.

As described above, the operating angle is regulated by causing the large-diameter portion of the shaft to interfere with the balls. Therefore, an outer diameter of the shaft can be set smaller than in a case of regulating the operating angle through interference with the outer joint member as in the related art. Thus, a blank diameter of the shaft can be set small. Further, the large-diameter portion which interferes with the balls is formed integrally with the shaft. Thus, unlike the separated structure as in the related art, reduction in number of components can be attained.

According to one embodiment of the present invention, it is preferred that the large-diameter portion be arranged on the shaft so as to be spaced apart from an end surface of the inner joint member by an axial distance which is equal to or smaller than a quarter of a diameter of the balls. When the large-diameter portion is arranged at a position close to the end surface of the inner joint member as described above, the large-diameter portion can be arranged at an optimum position for exhibiting the stopper function of regulating the operating angle to an angle smaller than the angle which causes the balls to drop off.

According to one embodiment of the present invention, it is preferred that the shaft have a maximum operating angle of 30° or less. This configuration is effective in application to a fixed type constant velocity universal joint to be used in a drive shaft for a rear wheel of an automobile, which has a maximum operating angle of 30° or less. Further, this configuration is effective in application to a fixed type constant velocity universal joint to be used in a propeller shaft for an automobile, which has a maximum operating angle of 10° or less.

### Advantageous Effects of Invention

According to the present invention, at the time of handling the constant velocity universal joint, the large-diameter portion of the shaft exhibits the function as the stopper configured to regulate the operating angle to an angle smaller than the angle which causes the balls to drop off. With this configuration, at the time of handling the constant velocity universal joint, the balls can be prevented from dropping off the outer joint member. With such a simple stopper structure, the blank diameter of the shaft can be set small, and the reduction in number of components can be attained. Thus, the cost reduction of the constant velocity universal joint can easily be attained.

### Brief Description of Drawings

FIG. 1 is a sectional view for illustrating a fixed type constant velocity universal joint according to an embodiment of the present invention under a state in which an operating angle is 0°.
FIG. 2 is a sectional view for illustrating the fixed type constant velocity universal joint of FIG. 1 under a state of forming an operating angle.
FIG. 3 is a sectional view for illustrating a fixed type constant velocity universal joint according to another embodiment of the present invention under a state of forming an operating angle.
FIG. 4 is a sectional view for illustrating a fixed type constant velocity universal joint according to another embodiment of the present invention under a state of forming an operating angle.
FIG. 5A is a front view of a shaft of FIG. 4 under a state before a spline is formed.
FIG. 5B is a front view of the shaft of FIG. 4 under a state after the spline is formed.
FIG. 6 is a sectional view for illustrating a fixed type constant velocity universal joint according to another embodiment of the present invention under a state of forming an operating angle.

### Description of Embodiments

Embodiments of the present invention are described in detail below. In the embodiments described below, for example, a Rzeppa type constant velocity universal joint (BJ) being one of fixed type constant velocity universal joints to be mounted to a drive shaft for an automobile is exemplified. However, the present invention is also applicable to an undercut-free type constant velocity universal joint (UJ) being another one of the fixed type constant velocity universal joints.

It is necessary that a drive shaft configured to transmit power from an engine to a driving wheel of an automobile be adaptable to angular displacement and axial displacement caused by a change in relative positional relationship between the engine and the wheel. Therefore, in general, the drive shaft has the following structure. A plunging type constant velocity universal joint which allows both the axial displacement and the angular displacement is installed on the engine side (inboard side), and the fixed type constant velocity universal joint which allows only the angular displacement is installed on the driving wheel side (outboard side). Both the constant velocity universal joints are coupled to each other through intermediation of the shaft.

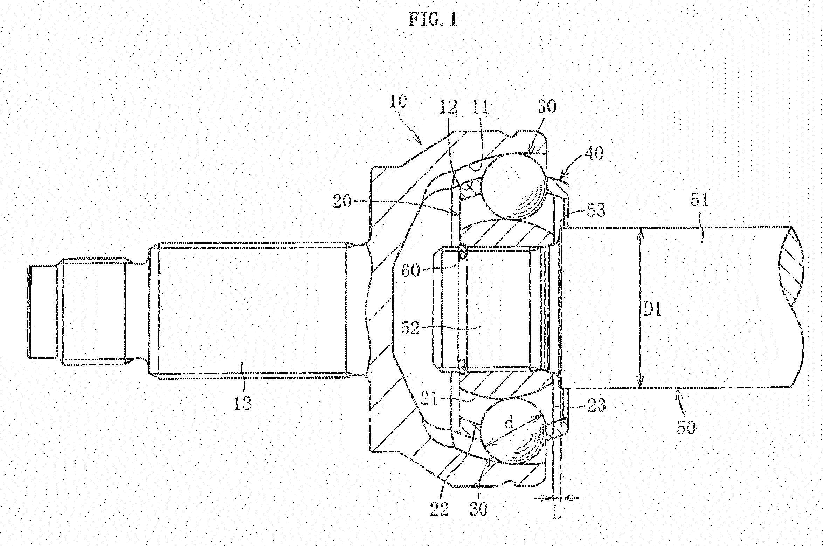

As illustrated in FIG. 1, the fixed type constant velocity universal joint described above comprises a outer joint member 10 having a cup-shape, an inner joint member 20, a plurality of balls 30, and a cage 40, which are received in the outer joint member 10, and has a shaft 50 extending from the inner joint member 20 and projecting from an opening portion of the outer joint member 10.

The outer joint member 10 has arc-shaped track grooves 11, which extend in an axial direction, and are formed equiangularly at a plurality of portions in a spherical inner peripheral surface 12. Further, a shaft 13 is formed integrally with the outer joint member 10 so as to extend from a cup-shaped bottom portion of the outer joint member 10 in the axial direction. The shaft 13 is coupled to a bearing for a wheel, which is configured to rotationally support a driving wheel (not shown) . The inner joint member 20 has arc-shaped track grooves 21, which are paired with the track grooves 11 of the outer joint member 10, and are formed equiangularly at a plurality of portions in a spherical outer peripheral surface 22. The balls 30 are interposed between the track grooves 11 of the outer joint member 10 and the track grooves 21 of the inner joint member 20, and are configured to transmit torque. The cage 40 is interposed between the spherical inner peripheral surface 12 of the outer joint member 10 and the spherical outer peripheral surface 22 of the inner joint member 20, and is configured to retain the balls 30. The shaft 50 is press-fitted into a shaft hole of the inner joint member 20, and is coupled thereto by spline fitting so as to allow torque transmission therebetween. The shaft 50 is retained with a snap ring 60.

In the constant velocity universal joint having the above-mentioned configuration, when an operating angle is formed by the shaft 50 between the outer joint member 10 and the inner joint member 20, the balls 30 retained in the cage 40 is always maintained within a plane obtained by bisection of the operating angle at any operating angle. Accordingly, constant velocity is secured between the outer joint member 10 and the inner joint member 20. Rotational torque is transmitted between the outer joint member 10 and the inner joint member 20 through intermediation of the balls 30 under the state in which the constant velocity is secured therebetween as described above.

This fixed type constant velocity universal joint is applied to a drive shaft for a front wheel of an automobile in many cases, but may also be applied to a drive shaft for a rear wheel of an automobile in some cases. In a case of a constant velocity universal joint to be used in the drive shaft for a rear wheel of an automobile, a maximum operating angle is 30° or less, which is small. Therefore, there is used an outer joint member 10, which is reduced in axial dimension by shortening the track grooves 11 as compared to a constant velocity universal joint to be used in the drive shaft for a front wheel of an automobile. With this configuration, downweighting and cost reduction of the constant velocity universal joint are attained.

Further, when the number of the balls 30 is eight, the track grooves 11 of the outer joint member 10 and the track grooves 21 of the inner joint member 20 can be reduced in depth as compared to a case of a constant velocity universal joint comprising six balls. As a result, thicknesses of the outer joint member 10 and the inner joint member 20 can also be reduced, which is effective in attaining down weighting and downsizing. The case of providing the eight balls is one example, and six balls may be provided. The number of the balls 30 may be freely selectable.

At the time of assembling the constant velocity universal joint, an angle which is equal to or larger than a maximum operating angle is formed so as to ensure a position at which a pocket of the cage 40 is visible without being blocked by the outer joint member 10, and then the balls 30 are incorporated. At the time of handling the constant velocity universal joint having the balls incorporated therein, for example, at the time of transporting the constant velocity universal joint or assembling the constant velocity universal joint to a vehicle, the outer joint member 10, the inner joint member 20, the cage 40, and the balls 30, which construct the constant velocity universal joint, are in a free state. In the free state, the constant velocity universal joint may form an angle which exceeds the maximum operating angle due to own weights of the components.

In this embodiment, a stopper structure described below is employed as a measure for preventing the balls 30 from dropping off the track grooves 11 of the outer joint member 10 even when the constant velocity universal joint forms an operating angle which is larger than the maximum operating angle at the time of handling the constant velocity universal joint as described above.

In the embodiment illustrated in FIG. 1, there is provided the stopper structure in which a large-diameter portion 51 is formed integrally with the shaft 50. The large-diameter portion 51 interferes with the balls 30 when the shaft 50 forms an operating angle, which is larger than the maximum operating angle, with respect to the outer joint member 10. In this embodiment, a portion of the shaft 50 excluding a shaft end portion 52 coupled to the inner joint member 20 corresponds to the large-diameter portion 51, and the large-diameter portion 51 has an outer diameter D1. Further, the large-diameter portion 51 is arranged on the shaft 50 so that an end portion 53 of the large-diameter portion 51 is closely spaced apart from an end surface 23 of the inner joint member 20 by an axial distance L which is equal to or smaller than a quarter of a diameter d of the balls.

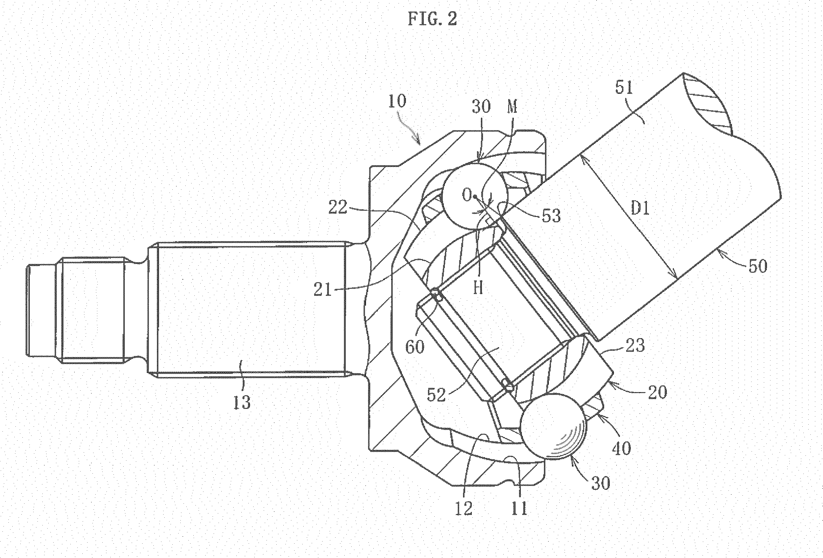

In the fixed type constant velocity universal joint, as illustrated in FIG. 2, when the shaft 50 forms an operating angle, which is larger than the maximum operating angle, with respect to the outer joint member 10, the end portion 53 of the large-diameter portion 51 formed integrally with the shaft 50 interferes with the balls 30. When the end portion 53 of the large-diameter portion 51 interferes with the balls 30 as described above, an approximately half part of the balls 30 projects from the end surface 23 of the inner joint member 20.

With this configuration, at the time of handling the constant velocity universal joint, for example, at the time of transporting the constant velocity universal joint or assembling the constant velocity universal joint to a vehicle, the end portion 53 of the large-diameter portion 51 of the shaft 50 exhibits a function as a stopper configured to regulate the operating angle to an angle smaller than an angle which causes the balls 30 to drop off. As a result, at the time of handling the constant velocity universal joint, the balls 30 can be prevented from dropping off the track grooves 11 of the outer joint member 10.

As described above, the operating angle is regulated by causing the large-diameter portion 51 of the shaft 50 to interfere with the balls 30. Therefore, an outer diameter (blank diameter) D1 of the large-diameter portion 51 of the shaft 50 can be set smaller than in a case of regulating the operating angle through interference with the outer joint member 10 as in the related art. Thus, a blank diameter of the shaft 50 can be set small. Further, the large-diameter portion 51 which interferes with the balls 30 is formed integrally with the shaft 50. Thus, unlike the separated structure as in the related art, reduction in number of components can be attained.

Further, the end portion 53 of the large-diameter portion 51 is arranged on the shaft 50 so as to be spaced apart from the end surface 23 of the inner joint member 20 by the axial distance L which is equal to or smaller than a quarter of the diameter d of the balls (see FIG. 1) . With this configuration, the large-diameter portion 51 can be arranged at an optimum position for exhibiting the stopper function of regulating the operating angle to an angle smaller than the angle which causes the balls 30 to drop off.

When the end portion 53 of the large-diameter portion 51 is arranged on the shaft 50 so as to be spaced apart from the end surface 23 of the inner joint member 20 by an axial distance larger than a quarter of the diameter d of the balls, it is difficult to cause the large-diameter portion 51 to interfere with the balls 30 at an angle smaller than the angle which causes the balls 30 to drop off.

Further, as illustrated in FIG. 2, assuming that a perpendicular line H extending from a ball center O to the shaft 50 is defined as a reference 0°, the end portion 53 of the large-diameter portion 51 is abuttable against the balls 30 within a range M. As described above, a portion of the balls 30, with which the end portion 53 of the large-diameter portion 51 is brought into contact, is regulated within the range M described above. With this configuration, the large-diameter portion 51 can be brought into contact with the balls 30 at an optimum portion for exhibiting the stopper function of regulating the operating angle to an angle smaller than the angle which causes the balls 30 to drop off. In this case, the range M is a range of an angle smaller than the maximum operating angle used in a front wheel (steered wheel) .

When the end portion 53 of the large-diameter portion 51 is abuttable against the balls 30 within a range wider than the range M, it is difficult to regulate the operating angle to an angle smaller than the angle which causes the balls 30 to drop off, with a result that a desired stopper function cannot be exhibited.

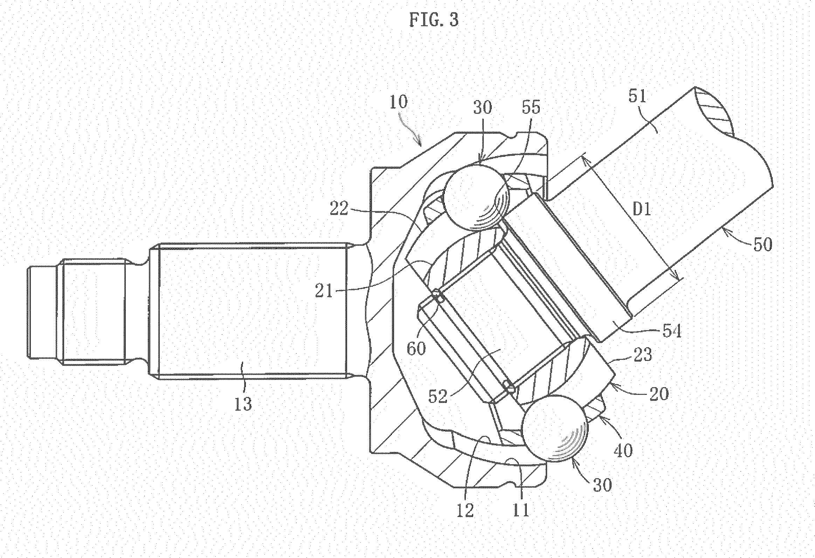

In the embodiment illustrated in FIG. 1, the structure in which the entire portion of the shaft 50 excluding the shaft end portion 52 coupled to the inner joint member 20 corresponds to the large-diameter portion 51 is illustrated. However, the present invention is not limited thereto. For example, structures of embodiments illustrated in FIG. 3, FIG. 4, and FIG. 6 may be employed.

FIG. 3, FIG. 4, and FIG. 6 are, similarly to the state illustrated in FIG. 2, illustrations of states in which large-diameter portions 54, 56, and 58 each formed integrally with the shaft 50 interfere with the balls 30 when the shaft 50 forms an operating angle, which is larger than the maximum operating angle, with respect to the outer joint member 10. In FIG. 3, FIG. 4, and FIG. 6, portions similar to those of FIG. 2 are denoted by the same reference symbols, and redundant description thereof is omitted.

In the embodiment illustrated in FIG. 3, the large-diameter portion 54 which interferes with the balls 30 is formed on a part of the shaft 50. The large-diameter portion 54 has a width in the axial direction, and hence an end portion 55 of the large-diameter portion 54 is brought into abutment against the balls 30. The large-diameter portion 54 is formed on a part of the shaft 50 as described above. Therefore, an outer diameter of a portion of the shaft 50 excluding the large-diameter portion 54 is set small, thereby being capable of attaining downweighting of the shaft 50.

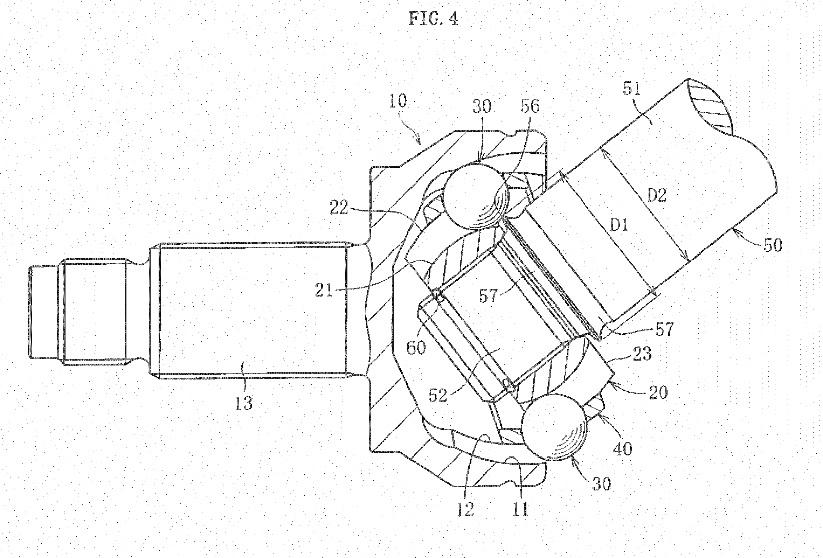

In the embodiment illustrated in FIG. 4, the large-diameter portion 56 which interferes with the balls 30 has a projection shape. The large-diameter portion 56 has an acute shape having no width in the axial direction. Therefore, the large-diameter portion 56 is entirely brought into abutment against the balls 30. The large-diameter portion 56 can be formed by plastic working.

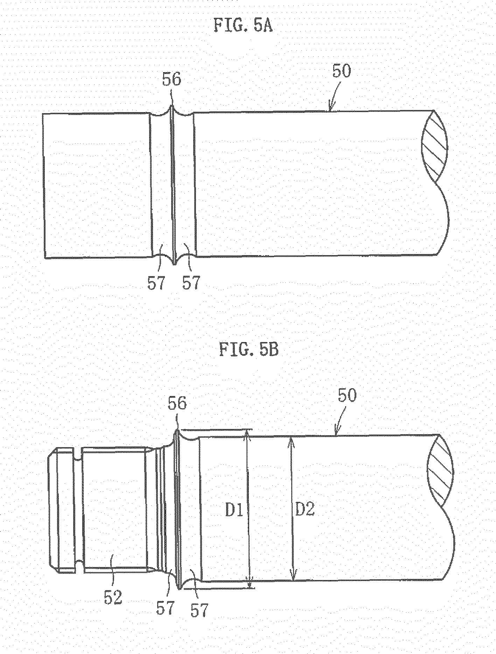

For example, in a case of a structure having groove portions 57 formed on both sides of the large-diameter portion 56 in the axial direction, the large-diameter portion 56 and the groove portions 57 can be formed by rolling processing. In this case, as illustrated in FIG. 5A, the large-diameter portion 56 and the groove portions 57 are formed by subjecting the shaft 50 to rolling processing. Thereafter, as illustrated in FIG. 5B, a spline and a peripheral groove for the snap ring 60 may be formed in the shaft end portion 52.

The large-diameter portion 56 is formed by plastic working as described above. Thus, the blank diameter can be reduced to D2 from the blank diameter in the case not involving plastic working (blank diameter D1 in FIG. 1 and FIG. 3) (D2<D1), thereby being capable of attaining further cost reduction.

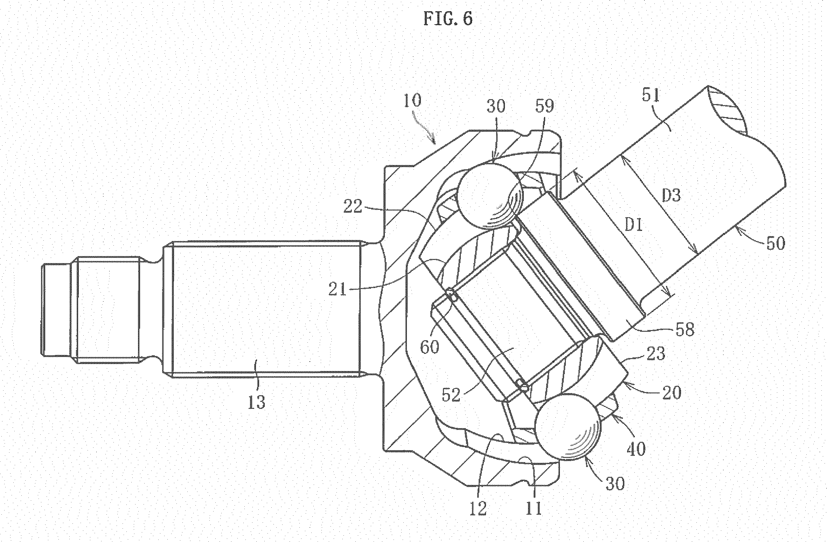

As other plastic working, partial diameter enlargement can be employed. In the embodiment illustrated in FIG. 6, the large-diameter portion 58 which interferes with the balls 30 is formed by partial diameter enlargement. The large-diameter portion 58 has a width in the axial direction, and hence an end portion 59 of the large-diameter portion 58 is brought into abutment against the balls 30.

The partial diameter enlargement is a sequential plastic working method of forming a thickened portion on a part of the shaft by applying alternating stress through a process of repeated pulling and compression by exposing the shaft blank being rotated to compressive stress and rotary bending in the axial direction.

Through employment of the partial diameter enlargement, a bulging amount of the large-diameter portion 58 can further be increased. As a result, the blank diameter can be reduced to D3 from the blank diameter in the case involving rolling processing (blank diameter D2 in FIG. 4) (D3<D2), thereby being capable of attaining further cost reduction.

The present invention is not limited to the above-mentioned embodiments. As a matter of course, the present invention may be carried out in various modes without departing from the spirit of the present invention. The scope of the present invention is defined in claims, and encompasses equivalents described in claims and all changes within the scope of claims.

## Claims

1. A fixed type constant velocity universal joint, comprising :
an outer joint member having a cup-shape; and
an inner joint member, which is received in the outer joint member, and is configured to transmit torque between the inner joint member and the outer joint member through intermediation of balls while allowing angular displacement,
the fixed type constant velocity universal joint having a shaft extending from the inner joint member,
the shaft comprising a large-diameter portion, which is formed integrally with the shaft, and interferes with the balls when the shaft forms an operating angle, which is larger than a maximum operating angle, with respect to the outer joint member.

2. The fixed type constant velocity universal joint according to claim 1, wherein the large-diameter portion is arranged on the shaft so as to be spaced apart from an end surface of the inner joint member by an axial distance which is equal to or smaller than a quarter of a diameter of the balls.

3. The fixed type constant velocity universal joint according to claim 1 or 2, wherein the shaft has a maximum operating angle of 30° or less.
